Europäisches Patentamt

European Patent Office

Office européen des brevets

(11) Publication number: **0 402 768**
**A2**

## EUROPEAN PATENT APPLICATION

(21) Application number: 90110786.2

(22) Date of filing: 07.06.90

(51) Int. Cl.⁵: **C09D 11/10**

(30) Priority: 14.06.89 US 366108

(43) Date of publication of application:
19.12.90 Bulletin 90/51

(84) Designated Contracting States:
AT BE DE DK ES FR GB IT NL SE

(71) Applicant: **PPG INDUSTRIES, INC.**
**One PPG Place**
**Pittsburgh Pennsylvania 15272(US)**

(72) Inventor: **Williams, Richard Kline, Jr.**
**3439 Huntertown Road**
**Allison Park, Pa. 15101(US)**

(74) Representative: **Sternagel, Hans-Günther, Dr.**
**et al**
**Patentanwälte Dr. Michael Hann Dr. H.-G.**
**Sternagel Sander Aue 30**
**D-5060 Bergisch Gladbach 2(DE)**

(54) **water-based printing compositions.**

(57) Disclosed herein is a printing comprising a water-based polymer which contains a high Tg emulsion polymer, a nonionic compound for rewetting, and resinous adjunct for reducing water-sensitivity.

EP 0 402 768 A2

## WATER-BASED PRINTING COMPOSITIONS

### Background of the Invention

The present invention relates to water-based printing compositions. More specifically, the present invention relates to water-based printing compositions comprising emulsion polymers and rewetting agents.

### Brief Description of the Prior Art

Emulsion polymers have been suggested for use in water-based ink compositions. High glass transition temperature (Tg) acrylic emulsion polymers, for example, have been considered to be useful because of their tendency to dry quickly. High Tg acrylic emulsions have the distinct advantage of being low in viscosity and yet high in percent solids. This enables one to put less water down on the substrate and thus substantially reduces or eliminates distortion of said substrate. However, in applications such as gravure printing, which is of particular interest here, ink compositions containing the high Tg acrylic emulsion polymers tend to dry too quickly on the gravure cylinder. Due to their poor rewettability, ink compositions containing the high Tg acrylic emulsion polymers tend to permanently dry in cells of gravure cylinders and, consequently, exhibit poor ink transfer to substrates.

The prior art has, in the main, employed urea, and cosolvents, or neutralized acid-containing oligomeric materials in solving the "dry in" problems. This approach, in turn, seems to adversely affect the rate of drying of the printed ink. Commonly assigned U.S. application Serial No. 07/123,627, entitled WATER-BASED INK COMPOSITIONS, filed November 23, 1987, discloses rewettable water-based ink compositions containing emulsion polymers and surfactants which transfer well and dry quickly on paper to exhibit good printability. The present invention provides for an improved rewettable water-based ink composition.

### Summary of the Invention

In accordance with the foregoing, the present invention encompasses a water-based printing composition containing a water-based polymer, in combination with an effective amount of a rewetting agent including a nonionic water-soluble compound which is substantially free of a surfactant, and usually urea, and further comprises a wetting agent. The term "rewetting" or "rewettability", as used herein, is defined as the ability of the ink to re-disperse in itself and/or water after a partial or complete drying. The term "wetting", as used herein, denotes wetting of a substrate that is being printed. The useful emulsion polymer preferably has a high Tg of about $50\degree$ C to $120\degree$ C or higher. By stating that the "nonionic compound is substantially free of a surfactant" is meant that the compositions of this invention do not rely on surfactants principally for rewetting.

It has been found that by employing a high Tg emulsion polymer, a nonionic water-soluble compound, and usually urea, there is imparted to the printing composition desirable properties of ink and water rewettability, high press speed without permanently drying in the cells of a gravure cylinder, and fast drying without curling, i.e., without distortion of unrestrained sheet of paper.

In order to effect water-insensitivity of the dried printed compositions, there is employed herein a water-soluble resinous adjunct which is preferably in the form of an emulsion polymer which is prepared by copolymerizing ethylenically unsaturated monomers in water, in the presence of a polymeric surfactant.

### Detailed Description of the Invention

The principal ingredients of the printing compositions of this invention are a water-based polymer, a rewetting agent comprising a nonionic water-soluble compound which is substantially free of a surfactant, and usually urea and further comprising a wetting agent. In the present embodiment of the invention, the water-based polymer comprises an emulsion polymer. Typically, the Tg of the useful polymer should be above the application temperature of the water-based compositions containing said polymer. In gravure printing, for example, the Tg should be above the temperature of the gravure cylinder.

Illustrative examples of the emulsion polymer are aqueous addition polymers such as acrylic or vinyl emulsion polymers. These polymers can be prepared by the free-radical addition polymerization of ethylenically unsaturated monomers in water in the presence of an emulsifier. Generally, the monomers are selected on the basis that the resultant polymer has a Tg greater than 20°C and preferably from about 50°C to 120°C or higher.

Non-limiting examples of useful monomers can be acrylic or methacrylic acid esters of cyclic or polycyclic alcohols, e.g, isobornyl acrylate and isobornyl methacrylate; acrylic acid or methacrylic acid ester such as methyl methacrylate; and vinyl monomers such as styrene, methyl styrene, vinyl toluene, vinyl acetate, vinyl chloride, vinylidene chloride and the like.

The emulsion polymers can be prepared by conventional free radical-initiated emulsion polymerization techniques in which the acrylic or vinyl monomers are dispersed in an aqueous medium in the presence of an emulsifier. The free-radical initiators useful herein are those which are water soluble. Examples thereof include peroxides, such as hydrogen peroxide, and ionic types such as ammonium persulfate sodium or potassium persulfate or sodium meta bisulfite.

The emulsifiers useful herein can be surfactants; preferably, an ionic surfactant is employed. A nonionic surfactant can be employed as well, preferably in combination with an ionic surfactant. The ionic surfactant can be anionic or cationic and it is preferably water soluble. The amount of the ionic surfactant that is used varies primarily with regard to its type, the type of nonionic surfactant that is in combination therewith, the selection of the monomers, the relative proportions of the monomers, and other factors such as the desired particle size of the resultant polymer. Typically, the total amount of the ionic surfactant is between 0.25 to 5 percent by weight based on the total weight of the monomers and preferably within the range of from about 0.5 to 3 percent by weight based on the total weight of the monomers.

Illustrative examples of the anionic surfactants useful herein can be sulfates, sulfonates, phosphates, and carboxylates. Illustrative examples of the cationic surfactants useful herein can be an amine salt employing counter-ions derived from strong acids, such as hydrochloric acid or hydrobromic acid, or other acids, such as alkyl sulfonic acid, e.g., methane sulfonic acid, and phosphorous-containing acids, such as phosphoric acid, phosphorous acid, hypophosphorous acid, alkyl phosphate or the like. Illustrative examples of the nonionic surfactants useful herein can be alkyl polyoxyalkylene polyether, alkylaryl polyoxyalkylene polyether, polyvinyl alcohol, acetylenic diols, and polyoxyalkylene derivatives of acetylenic diols.

Optionally, chain transfer agents, such as alkyl mercaptans, such as 1-dodecanethiol, tertiary-dodecyl mercaptan, isooctylthioglycolate, and chlorohydrocarbons, such as chloroform, can be used.

The free-radical emulsion polymerization technique can be of a continuous monomer feed, semi-continuous monomer feed, pre-emulsion and/or seeding. The resultant emulsion has a solids content of about 10 to 65 percent by weight and a particle size of about 500 to 5000 angstroms.

In a preferred embodiment of the invention, the rewetting agent can include urea and a nonionic water-soluble compound which is substantially free of a surfactant. The rewetting agent preferred herein is further characterized in that in an effective amount, it does not adversely affect viscosity of the subject composition. Hence, a high solids composition can be obtained. The preferred rewetting agent can also provide a means for promoting the formation of continuous film of the composition. The rewetting agent, thus, can aid in coalescence of the composition.

An additional coalescing aid can be employed herein. It is, however, worth noting that the additional coalescing aid, as to amount and type, can affect the effectiveness of rewetting agent. The additional coalescing aid useful herein is typically that which is employed with an emulsion polymer for film-formation. Given the teachings herein, it will be within the purview of the skilled artisan to select the appropriate additional coalescing aid and, for that matter, the rewetting agent useful therewith as to type and amount.

As a rewetting agent, the useful nonionic water-soluble compound can be aminoplast condensates which are fully or partially alkylated, alkoxylated polyols, e.g., ethoxylated or propoxylated polyols such as sucrose polyols, polyesters, and a mixture thereof. The preferred aminoplast condensates are obtained from the reaction of formaldehyde with an amine or an amide. The most common amines or amides are melamine, urea or benzoguanamine. However, condensates with other amines and amides can be employed, for example, aldehyde condensates or diazines, triazoles, guanidines, guanamines and alkyl and aryl-di-substituted derivatives of such compounds including alkyl and aryl-substituted ureas and alkyl and aryl-substituted melamines and benzoguanamines. Some examples of such compounds are N,N-dimethylurea, N-phenylurea, dicyandiamide, formoguanamine, acetoguanamine, 6-methyl-2,4-diamino-1,3,5-triazine, 3,5-diaminotriazole, triaminopyrimidine, 2,6-triethyltriamine-1,3,5-triazine and the like. While the aldehyde employed is most often formaldehyde, other aldehydes, such as acetaldehyde, crotonaldehyde,

3

benzaldehyde and furfuryl, may be used.

The aminoplast contains methylol or similar alkylol groups and preferably at least a portion of these alkylol groups are etherified by reaction with an alcohol. Any monohydric alcohol may be methanol, ethanol, butanol and hexanol.

Preferably, the aminoplasts which are used are melamine-, urea- or benzoguanamine-formaldehyde condensates etherified with an alcohol containing from about 1 to 4 carbon atoms, e.g., methanol, which is preferred, ethanol, butanol or a mixture thereof.

By "water-soluble" herein is meant that the nonionic compounds are compatible with the continuous phase and the dispersed phase of the emulsion polymer used herein. The nonionic water-soluble compound is substantially non-crosslinking and is employed herein in an effective amount to impart ink and water rewettability without compromising other printing properties such as curling, water sensitivity and the like.

The printing composition of the present invention also contains a wetting agent which allows the composition to lay smoothly and wet the substrate. The wetting agents can be surfactants, e.g., anionic, cationic, or nonionic or mixtures thereof. The choice and level of the surfactant to be used depends on the substrate and usually is determined empirically. Examples of surfactants which can be used are described above. Surfactants should be kept at the minimum level to avoid associated problems such as foaming.

In the particularly preferred embodiment of the invention, the composition of this invention containing a water-based polymer further comprises a "water soluble" resinous adjunct. The resinous adjunct should be such that the presence thereof does not cause a significant reduction in the solids content of the compositions. Without being bound to any particular theory of the invention, it is believed that the resinous adjunct coacts to effect reduction in water-sensitivity of the printed composition. This property is all the more appreciated upon aging of the printed composition, whereupon water-sensitivity is more pronounced.

The water-soluble resinous adjunct comprises an acid or a base-neutralized polymer, such as an acrylic water-soluble addition polymer, e.g., an amine salt of an acid-functional acrylic polymer. Resinous adjunct is preferably in the form of an emulsion which can be prepared by polymerizing ethylenically unsaturated monomers in water in the presence of a polymeric surfactant. The polymeric surfactant can be a base-neutralized acid-functional polymer.

The usual preparation of these copolymers involves polymerizing the ethylenically unsaturated carboxylic acid-containing monomer with suitable ethylenically unsaturated monomers at temperatures of about 50° C to 150° C in a water-miscible solvent followed by solubilizing said polymer in water in the presence of a base such as an amine or ammonia. Any of the typical free radical-initiating catalysts can be used and examples include azobis (alpha-gamma)-dimethylvaleronitrile, tertiary-butylperbenzoate, tertiary-butylperacetate, and benzoyl peroxide. The chain transfer agents mentioned above can be used. Water-soluble or water-miscible solvents are used in the polymerization. Examples of suitable solvents include alcohols such as ethyl alcohol, n-propanol and isopropanol; ketones such as acetone, and methylethylketone; and glycol ethers such as ethylene glycol monomethyl ether, ethylene glycol monoethyl ether and diethylene glycol ethyl ether.

Examples of the carboxylic acid or anhydride-containing ethylenic unsaturation include acrylic acid, methacrylic acid, maleic anhydride, and the alkyl half esters of maleic acid containing from 1 to 8 carbon atoms in the alkyl group. A sufficient acid-containing monomer is used to achieve water solubility after neutralization with a base or an amine. Generally, the polymer contains 15 to 50 percent acid-containing monomer and the acid value of the polymer is from 80 to 400 mg KOH/grams.

Preferred co-monomers useful herein are the alkyl esters of acrylic acid and methacrylic acid such as methyl, ethyl, propyl, butyl, or 2-ethylhexyl acrylates and methacrylates; hydroxyalkyl acrylates and methacrylates having 2 to 4 carbon atoms in the alkyl group, including 2-hydroxyethyl acrylate or methacrylate, 2-hydroxypropyl acrylate or methacrylate, styrenes; acrylamides; and methacrylamides, N-alkoxymethylacrylamides, such as N-ethoxymethylacrylamide and N-butoxymethylacrylamide, are preferred copolymerizable monomers because of the internal curing sites they provide in the polymer emulsion product. The weight average molecular weight of the copolymer can be from 2,000 to 20,000 based on gel permeation chromatography using polystyrene as a standard.

The polymerized material is next made dispersible in water by treating it with an amine (including ammonia) or an inorganic base. Satisfactory amines include ammonia and primary, secondary and tertiary amines. The preferred neutralizing material is ammonia. Examples of suitable amines include ethanol amine, diethanol amine, N-methylethanol amine, dimethylethanol amine, methyl amine, ethyl amine, diethyl amine, trimethyl amine, triethyl amine and morpholine. Suitable inorganic bases include potassium hydroxide and sodium hydroxide. The amount of amine, or inorganic base, employed is sufficient to solubilize the formed polymer in water. Generally, the amount needed is equivalent to at least 25 percent of the total theoretical neutralization. The polymer can be completely neutralized. Usually, the pH of the final aqueous dispersion is adjusted from about 7.5 to 11. The resultant polymer is in effect a water-soluble anionic addition polymer.

The emulsion polymer is prepared by conducting an emulsion polymerization in the solution of the water-soluble polymer. This is usually accomplished by adding a mixture of monomers to the solution of the water-soluble polymer employing catalysts normally used in emulsion polymerization. Surfactants are generally not used as emulsifiers since the water-soluble polymer provides stabilization of the particle. However, surfactants may be used to achieve particular end results. The polymerization is normally conducted at temperatures from about 50°C to 100°C. The catalysts used are water-soluble and are mentioned above for use in emulsion polymerizations. Ethylenically unsaturated monomers that are useful are those typically used in emulsion polymerization. However, it is important to select monomers that give a relatively high Tg (i.e., greater than 50°C) for the polymer. The molecular weights obtained are characteristic of emulsion polymerization and are typically from 200,000 to greater than 1,000,000. The chain transfer agents mentioned above can be used. The particle size of the emulsion is from about 500 to 3000 angstroms. The final composition of the piggy-back emulsion solids is about 10 to 40 percent by weight water-soluble polymer and about 90 to 45 percent emulsion polymer. The percent solids of the final emulsion is from about 30 to 50 percent and the pH can vary from about 7.5 to 11.

The relative ratios of the components used in the ink of the present invention depend on the type and amount of the respective components. Thus, the total amount of emulsion polymers used (including the emulsion polymer of the resinous adjunct) can be from about 60 to 95 percent of the total resin solids. The amount of urea used as a rewetting agent can be from about 20 to 60 and preferably about 30 to 40 percent resin solids. The amount of nonionic water-soluble compound used as a rewetting agent can vary from about 15 to 85 percent and preferably about 30 to 50 percent by weight of the resin solids. A surfactant may be used as an additive for distinct reasons such as substrate wetting. Amounts from about 1 to 15 percent and preferably about 1 to 10 percent by weight of resin solids.

In preparing the water-based printing compositions of this invention, there is also employed typical additives, such as waxes, defoamers, extenders, plasticizers, cosolvents and the like; the rest of the compositions comprise water. In ink compositions, there are, of course, employed an organic or inorganic pigment or mixtures, or pigment presscakes. The percent by weight of pigment is from about 2 to 20 percent and preferably from about 3 to 15 percent of the total ink composition. The percent by weight solids of the ink composition is from about 40 to 50 percent solids when applied at typical ink viscosities.

The resultant ink composition can be printed at a high-press speed without permanently drying in the cells of a gravure cylinder. The printed ink dries quickly without curling. This and other aspects of the invention are further illustrated by the following non-limiting examples.

EXAMPLE A

A high Tg anionic acrylic emulsion polymer employed in the preparation of the ink composition of this invention was prepared as follows:

| Reactor Charge | |
|---|---|
| Ingredients | Parts by Weight (grams) |
| Deionized water | 774.7 |
| SIPEX UB[1] | 5.0 |
| Sodium bicarbonate | 0.5 |
| AEROSOL MA 80[2] | 5.2 |

(1) Sodium lauryl sulfate (30% active in water) from Alcolac.
(2) Sodium dihexyl sulfosuccinate (80% active) from American Cyanamid.

| Feed A | |
|---|---|
| Ingredients | Parts by Weight (grams) |
| Deionized water | 100.0 |
| Potassium persulfate | 4.0 |

| Feed B | | |
|---|---|---|
| Ingredients | % by Weight | Parts by Weight (grams) |
| Methyl methacrylate | 54.1 | 841.2 |
| Styrene | 39.6 | 612 |
| 2-Ethylhexyl acrylate | 5.4 | 77.9 |
| Methacrylic acid | 0.9 | 15.0 |
| IDT[3] | -- | 4.0 |
| Deonized water | -- | 775.2 |
| IGEPAL CO 897[4] | -- | 80 |
| SIPEX UB | -- | 20.2 |
| AEROSOL MA 80 | -- | 20.4 |

(3) 1-Dodecanethiol.
(4) Nonyl phenol polyethoxylate containing about 40 moles of oxide (80% active) from GAF.

| Feed C | |
|---|---|
| Ingredients | Parts by Weight (grams) |
| Deionized water | 200.4 |

Feed B was pre-emulsified by adding the premixed monomers to the agitated surfactant containing water.

In a properly equipped reaction vessel, the reactor charge was heated under a nitrogen blanket to 78°C and 49.5 grams of Feed B was added thereto. Feed A was then added and the reaction mixture was held for 30 minutes at about 80°C. Thereafter, the addition of the rest of Feed B was commenced and conducted over three hours. Feed C was then added to the resultant mixture which was held for one hour at 80°C and then cooled. Analysis: 46.9 percent solids (at 105°C for two hours); acid value was 4.30, particle size was 1110 angstroms.

An ink composition was formulated with the above acrylic latex (in a blending varnish) urea-formaldehyde resin, and yet another emulsion polymer which is prepared as follows:

## EXAMPLE B

The emulsion polymer used herein was prepared as follows:

6

| Charge | Ingredients | Parts by Weight (grams) |
|---|---|---|
| A | Deionized water | 1400 |
|   | Joncryl 678[1] | 250 |
|   | Aerosol MA-80 (3.0% on solids) | 30 |
| B | 28% Ammonia | 78 |
| C | Ammonium peroxy disulfate | 8.0 .870 |
|   | Deionized water | 30 |
| D | Styrene | 550 |
| E | Styrene | 40 |
|   | Butylacrylate | 150 |
| F | Styrene | 10 |
| G | Ammonium peroxy disulfate | 1.0 |
|   | Deionized water | 10 |

In a properly equipped reaction vessel, Charge A was heated. At 40°C, there was commenced and continued a dropwise addition of Feed B over the temperature range of about 40°C to 85°C, over a period of 10 to 15 minutes. With the addition completed, the reaction mixture was heated to 80°C and Feed C was added thereto and held for 10 minutes. At 83°C, addition of Feed D was commenced and continued a period of 1-1/2 hours. Feed E was then added over a temperature range of 81°C to 80°C, over one-half hour followed by holding for one hour. Feed F was added at 80°C over a period of 10 minutes followed by holding for one hour. Feed G was then added over a temperature range of about 79°C to 82°C for 10 minutes followed by holding for one hour.

The reaction product had a pH of 8 to 9, a solids content of 40.69, a Brookfield viscosity of 32.0 centipoise with No. 3 spindle, at 30 revolutions per minute (rpm).

## EXAMPLE C

An ink composition was prepared as follows:

| Blending Varnish | |
|---|---|
| Ingredients | Parts by Weight (grams) |
| High Tg emulsifier polymer of Example A | 74.4 |
| Defoamer (XP-66)[1] | 0.2 |
| SURFONYL SE[2] | 0.1 |
| Dimethylethanol amine | 0.3 |

(1) Hydrocarbon/ester blend XP-66 defoamer available from Santek Chemicals.
(2) One hundred percent active nonionic surfactant derived from 2,4,7,9 tetramethyl-5-decyn-4, 7 diol.

The above were mixed with stirring and blended with:

7

| Ingredients | Parts by Weight (grams) |
|---|---|
| BETTLE 65[3] | 25.0 |

(3) Partially methylated urea-formaldehyde resin available from American Cyanamid.

## EXAMPLE D

| Clay Varnish | |
|---|---|
| Ingredients | Parts by Weight (grams) |
| High Tg emulsion polymer of Example A | 55.2 |
| Defoamer (XP-66)[1] | 1.7 |
| SURFONYL SE | 1.7 |

(1) Available from Santek Chemicals.

The above were mixed well and blended with:

| Ingredients | Parts by Weight (grams) |
|---|---|
| UREA | 21.0 |
| Clay | 21.0 |

## EXAMPLE E

Varnish for the ink composition was prepared as follows:

| Ingredients | Parts by Weight (grams) |
|---|---|
| Blending varnish of Example C | 71.2 |
| Clay varnish of Example D | 14.3 |
| Emulsion polymer of Example B | 11.0 |
| JONWAX 26[2] | 3.0 |
| MAZAWET DF | 0.5 |

(2) Polyethylene wax emulsion available from S. C. Johnson and Son Co.

The above ingredients were blended thoroughly with conventional water-based pigment dispersions such as is available from Sun Chemical Co. at levels of 5 percent to 30 percent base to produce ink compositions having solids contents of 49.0 and viscosities of 17.00 to 18.00 seconds in a No. 2 Zahn.

The above ink was applied to clay-coated paper by gravure printing at the speed of 1800 feet per minute. The ink showed good printability and drying rate while maintaining good ink and water rewettability.

Rewetting was determined with the ink at press viscosity of 18.00 seconds using a No. 2 shell cup on a laboratory geiger press set at 300 feet per minute with a standard 150-line cylinder employed to print a solid coverage on paper.

With the doctor blade engaged, the press was turned off for 30 minutes, allowing ink to dry in cylinder cells. Thereafter, the press was restarted to print all solid coverages on paper until all the dried ink areas of the cylinder printed at equal density. The inks of this invention showed rewetting with 30 seconds from restart of the press.

While the illustrative embodiments of the invention have been described hereinabove, it will be understood that various modifications will be apparent to and can be made by those skilled in the art without departing from the scope or spirit of the invention. Accordingly, it is intended that claims directed to the invention be construed as encompassing all aspects of the invention which would be treated as equivalents by those skilled in the art to which the invention pertains.

## Claims

Claim 1. In an improved high solids printing composition containing a water-based polymer which comprises a high Tg emulsion polymer, a rewetting agent, and a wetting agent, the improvement comprising the rewetting agent which includes a nonionic water-soluble compound which is substantially free of a surfactant.

Claim 2. A high solids printing composition of claim 1 wherein the Tg of the emulsion polymer is from about 50°C to 120°C.

Claim 3. A high solids composition of claim 1 wherein the nonionic water-soluble compound is selected from the group consisting of an aminoplast resin which is fully or partially alkylated, alkoxylated polyols, a polyester polyol, and a mixture thereof.

Claim 4. A high solids composition of claim 1 wherein the nonionic water-soluble compound is a partially methylated urea-formaldehyde resin.

Claim 5. A high solids composition of claim 1 wherein the rewetting agent includes urea in combination with the nonionic water soluble compound.

Claim 6. A high solids water-based composition of claim 1 which further comprises an anionic water-soluble addition polymer.

Claim 7. A high solids composition of claim 1 wherein the high Tg emulsion addition polymer is at least in part an emulsion addition polymer which is prepared by copolymerizing ethylenically unsaturated monomers in water, in the presence of a polymeric surfactant.

Claim 8. A high solids composition of claim 7 wherein the polymeric surfactant is an amine-neutralized water-soluble acrylic polymer.

Claim 9. A high solids composition of claim 1 having a total solids content of about 35.0 to 55.0 percent based on total ink composition.

Claim 10. A process for printing comprising applying to a substrate the composition as described in claim 1.

Claim 11. A process for printing comprising applying to a substrate the composition as recited in claim 5.

Claim 12. A process for printing comprising applying to a substrate the composition as recited in claim 6.

Claim 13. A process for printing comprising applying to a substrate the composition of claim 7.